# Europäisches Patentamt

# European Patent Office

# Office européen des brevets

(19)

(11) Veröffentlichungsnummer: **0 232 478**
**B1**

(12)  # EUROPÄISCHE PATENTSCHRIFT

(45) Veröffentlichungstag der Patentschrift:
17.10.90

(51) Int. Cl.⁵: **B65D 90/32**

(21) Anmeldenummer: **86115675.0**

(22) Anmeldetag: **12.11.86**

(54) **Vorrichtung zum Ausgleich von Druckstössen in geschlossenen Systemen wie Rohrleitungen oder dergleichen.**

(30) Priorität: **05.02.86 DE 8602948 U**
**08.08.86 DE 3626946**

(43) Veröffentlichungstag der Anmeldung:
**19.08.87 Patentblatt 87/34**

(45) Bekanntmachung des Hinweises auf die Patenterteilung:
**17.10.90 Patentblatt 90/42**

(84) Benannte Vertragsstaaten:
**AT BE CH DE ES FR GB GR IT LI LU NL SE**

(56) Entgegenhaltungen:
**DE-A- 2 455 325**
**DE-A- 3 042 026**
**DE-A- 3 106 138**

(73) Patentinhaber: **Thorwesten, Albert, Dünninghausen 43, D-4720 Beckum(DE)**

(72) Erfinder: **Thorwesten, Albert, Dünninghausen 43, D-4720 Beckum(DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1(DE)**

## Beschreibung

Die Erfindung betrifft eine Vorrichtung zum Ausgleich von Druckstößen bei möglichen Staub- oder Gasexplosionen in geschlossenen Systemen wie Silos, Rohrleitungen oder dgl. mit einem um eine Schwenkachse an einem Auslaßstutzen verschwenkbaren Klappdeckel in Leichtbauweise und einem mittels elastischer Elemente mit dem Auslaßstutzen verschwenkbaren Klappdeckel im Leichtbauweise und einem mittels elastischer Elemente mit dem Auslaßstutzen verbundenen Auffangteller, wobei die im Öffnungsfall aufeinander zustrebenden Flächen des Klappdeckels und des Auffangtellers eben ausgebildet sind.

Bekannte Explosionsklappen dieser Art (DE-C 3l 06 l38) arbeiten schon sehr zufriedenstellend, weil die sich bewegende Masse dank der Leichtbauweise des Deckels vergleichsweise gering ist, so daß starke Dämpfungsglieder entbehrlich sind. Ferner wird aufgrund der Gestaltung der miteinander korrespondierenden Flächen des Klappdeckels einerseits und des Auffangtellers andererseits erreicht, daß das dazwischenliegende Luftvolumen als Puffer wirkend verdrängt werden muß und schließlich durch ein Verschwenken des Auffangtellers um seine elastischen Lagerelemente durch den aufschlagenden Klappdeckel die Restenergie abgebaut und anschließend der Deckel durch Rückfedern des Auffangtellers wieder in Schließrichtung zurückbewegt wird. Dennoch hat es sich bei der bekannten Explosionsklappe bei mit besonders hoher Energie erfolgenden Staub- oder Gasexplosionen gezeigt, daß der Klappdeckel und/oder der Auffangteller abgesprengt werden können und damit Beschädigungen von Material und Verletzungen von Personen ausgelöst werden können.

Aufgabe der Erfindung ist eine Verbesserung der bekannten Vorrichtung derart, daß das Abfangen des Klappdeckels im Explosionsfall noch sanfter erfolgt, um Beschädigungs-bzw. Verletzungsgefahren weitgehend auszuschalten.

Bei einer Vorrichtung der eingangs bezeichneten Art wird diese Aufgabe gemäß der Erfindung dadurch gelöst, daß dem Auffangteller in Richtung auf den Klappdeckel mindestens eine beidseitig ebene Pufferplatte mit geringem Winkelabstand derart zugeordnet ist, daß diese Pufferplatte beim Auftreffen des Klappdeckels gegen die ebene Fläche des Auffangtellers verschwenkbar ist.

Aufgrund dieser Ausbildung wird erreicht, daß ein mehrfacher Dämpfungsvorgang durch das zwischen Klappdeckel und Pufferplatte bzw. zwischen letzterer und dem Auffangteller zu verdrängende Luftvolumen geschaffen wird, wobei dieser Puffereffekt naturgemäß durch Vorsehung mehrerer zwischengeschalteter Pufferplatten noch verstärkt werden kann.

Als zweckmäßig und ausreichend hat es sich erwiesen, wenn der Winkelabstand in Bereitschaftsstellung zwischen dem Auffangteller und der zugeordneten Pufferplatte und zwischen evtl. weiteren Pufferplatten jeweils ca. 5° beträgt.

Zweckmäßig kann dabei jede Pufferplatte am Auffangteller bzw. an der nächstbenachbarten Pufferplatte mittels Kette od. dgl. gehalten sein.

Um den Puffereffekt noch zu verstärken, kann jede Pufferplatte mit einem ein- oder beidseitigen Randkragen versehen sein, wodurch das Entweichen der Luft zwischen den sich jeweils aufeinanderzubewegenden Flächen verlangsamt bzw. erschwert wird.

Von Vorteil ist es weiterhin, wenn der Auffangteller in Bereitschaftsstellung in einem 90° geringfügig unterschreitenden Winkel zur Verschlußlage des Klappdeckels angeordnet ist, wobei der Winkel vorzugsweise etwa 80° betragen kann.

Zweckmäßig ist es ferner, den Auffangteller und die Pufferplatten um die Schwenkachse des Klappdeckels schwenkbar anzuordnen.

In Weiterbildung der Erfindung ist es besonders zweckmäßig, Blattfedern mit progressiver Federkennlinie auf der der Schwenkachse des Auffangtellers gegenüberliegenden Seite an einem Ende mit Abstand von der Schwenkachse sowohl in Richtung des Auslaßstutzens als auch senkrecht dazu zu befestigen, während das andere Ende der Blattfedern in an der Rückseite des Auffangtellers angeordneten Gleitführungen gleitbar beweglich angeordnet ist. Zweckmäßig können dabei die Gleitführungen an der Rückseite des Auffangtellers gleichzeitig als Verstärkungsrippen für diesen ausgebildet sein.

Aufgrund der vorbeschriebenen Ausbildung wird bewirkt, daß der Ort der Abstützung des Auffangtellers durch die Blattfedern bei seiner Zurückfederung infolge des Auftreffens des Klappdeckels einen zunehmend größeren Abstand von der Schwenkachse aufweist, wodurch sich eine zunehmende Verstärkung bzw. Versteifung der Abstützung des Auffangtellers durch die wie vorstehend ausgebildeten und angeordneten Blattfedern ergibt bzw. mit anderen Worten sich eine weitere Progression der Federwirkung mit zunehmendem Wegschwenken des Auffangtellers ergibt, wobei umgekehrt das Rückfedern des Auffangtellers und damit die Schließbewegung des Klappdeckels zunehmend sanfter erfolgt.

Als zweckmäßig hat es sich dabei erwiesen, wenn in Bereitschaftsstellung der Explosionsklappe das obere Gleitende der Blattfedern etwa einen Abstand von der Schwenkachse des Auffangtellers aufweist, der etwa einem Drittel der Erstreckung des Auffangtellers in Richtung der Gleitführungen entspricht.

Es hat sich gezeigt, daß aber nicht nur plötzlich auftretende überdrücke für Silos, Rohrleitungen od. dgl. gefährlich werden können, sondern auch Unterdrücke. So kann es beispielsweise vorkommen, daß nach einer Explosion, die vom Silo unbeschadet überstanden wurde, die heißen Gase im System sich abkühlen, was langsamer erfolgen kann, so daß es erst nach einiger Zeit zu einem erheblichen Unterdruck gegenüber der Umgebung kommen kann.

Mit einer Vorrichtung der eingangs bezeichneten Art wird dieses Problem gemäß der Erfindung dadurch gelöst, daß in einem Wandbereich eine sich an der Innenseite der Wand anlegende Unterdruckklappe vorgesehen ist, die über einen Scharnierhebel und mittels einer am Scharniergelenk angebrachten Feder in dichtender Stellung gehalten ist.

Eine derartige Unterdruckklappe kann in Anlehnung an das Wort Explosionsklappe auch Implosionsklappe genannt werden; sie ermöglicht wenigstens kurzzeitig einen Ausgleich der Drücke für den Fall, daß der Innendruck des Systems deutlich geringer ist als der Umgebungsdruck. In diesem Falle öffnet sich die Unterdruckklappe und ermöglicht ein Einströmen von Umgebungsluft in das System. Nach Ausgleich der Drücke schließt die Klappe wieder.

Da das Einsatzgebiet derartiger Unterdruckklappen im Regelfalle Silos, Rohrleitungen oder ähnliches, im wesentlichen zylindrische Körper sind, muß gewährleistet sein, daß die zum Inneren dieser Systemelemente hin öffnende Unterdruckklappe gleichwohl einen möglichst großen Öffnungsweg ausführt, um auf diese Art und Weise einen möglichst großen Öffnungsquerschnitt zu erreichen. Hierzu sieht die Erfindung vor, daß der Scharnierhebel winkel- oder bogenförmig ausgebildet ist. Diese Winkel- und Bogenform ermöglicht ein weites nach Innenschwenken in das System, womit die von der Unterdruckklappe abgedichtete Öffnung vollständig freigegeben wird und damit zum Einströmen von umgebender Atmosphäre zur Verfügung steht.

Zweckmäßig kann es sein, wenn die Unterdruckklappe mit einer umlaufenden, sich vollständig an der Innenwand anlegenden Dichtung ausgerüstet ist. Hierbei kann es sich um eine im wesentlichen stark verformbare, elastische Dichtung handeln. Da sich die Unterdruckklappe vollständig von der Unterlage abhebt, was durch den Scharnierhebel möglich gemacht wird, ist so die Dichtung sehr zuverlässig zu erreichen, ohne daß große Toleranzgenauigkeiten eingehalten werden müssen, was eine sehr wirtschaftliche und vorteilhafte Herstellung der Vorrichtung möglich macht.

Die Erfindung sieht auch vor, daß die im Scharnier angeordnete Schließfeder in ihrer Federkraft einstellbar angeordnet ist, womit die Unterdruckklappe dem jeweiligen Einsatzgebiet und auch den statischen Bedingungen ihrer Umgebung anpaßbar ist.

Vorteilhaft ist es, wenn eine Mehrzahl von Unterdruckklappen am Umfang des Rohrstutzens vorgesehen sind, was bewirkt, daß der zur Verfügung stehende Querschnitt zum Einströmen von Umgebungsatmosphäre in das an sich geschlossene System stark vergrößerbar und den jeweiligen Verhältnissen anpaßbar ist. So kann beispielsweise die Federkraft der einzelnen Klappen völlig gleich eingestellt sein, so daß diese sich synchron öffnen oder aber auch geringfügig unterschiedlich derart sein können, daß die Klappen im Einsatzfalle nacheinander die Durchströmungsquerschnitte freigeben.

Erfindungsgemäß ist darüber hinaus vorgesehen, daß die Bereiche des Rohrstutzens mit den von den Unterdruckklappen verschlossenen Öffnungen außenseitig mit Witterungsschutzdächern ausgerüstet sind, um z.B. das Eindringen von Feuchtigkeit in das System oder das Vereisen der Klappen bei Regen und anschließendem Frost bzw. Schnee zu verhindern.

Die Erfindung ist nachstehend anhand der Zeichnung beispielsweise näher erläutert. Diese zeigt in

Fig. I eine Explosionsklappe gemäß der Erfindung in Seitenansicht mit in durchgehenden Linien wiedergegebenem Auffangteller in Bereitschaftsstellung und mit in gestrichelten Linien wiedergegebener maximaler Aufschwenkstellung und in

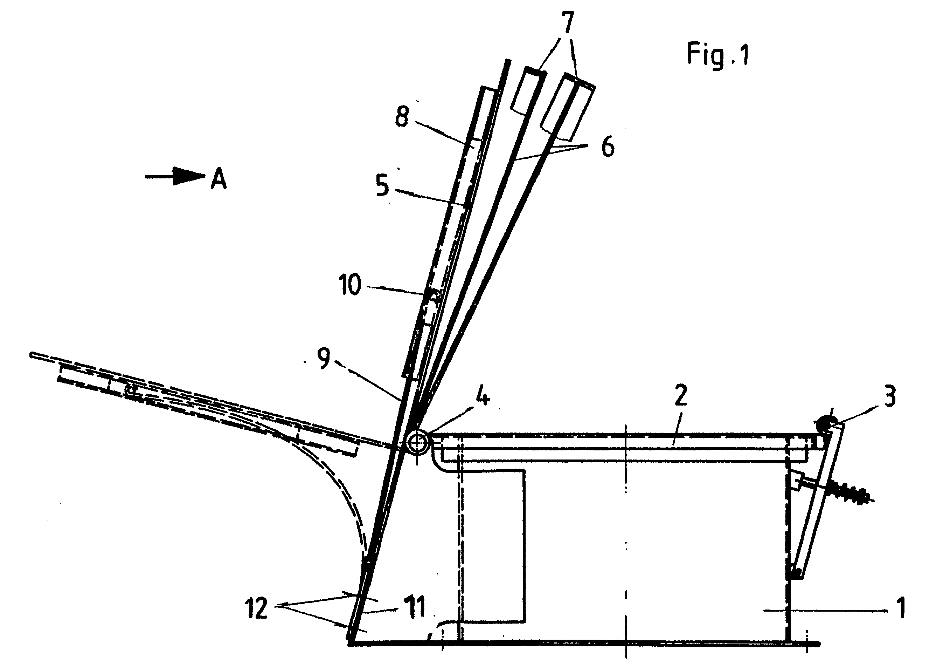

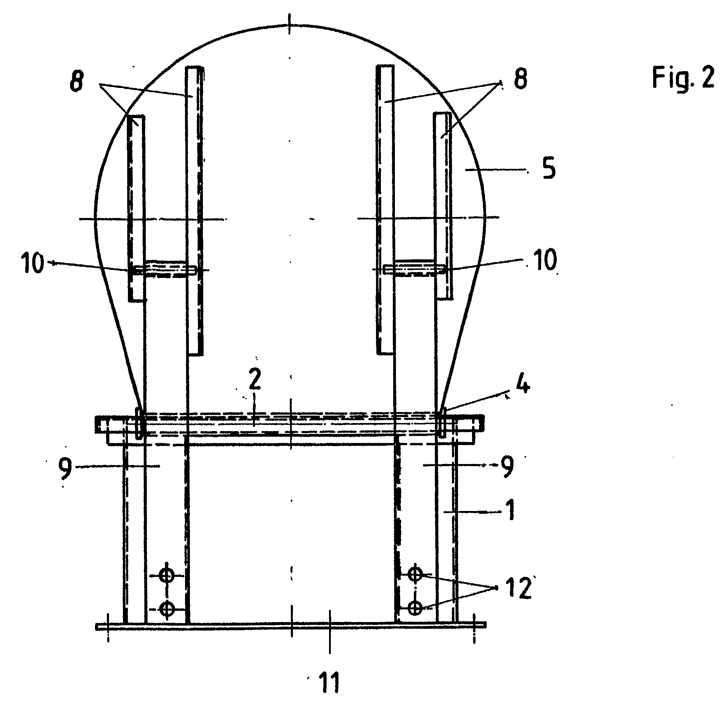

Fig. 2 eine Ansicht der Explosionsklappe in Richtung des Pfeils A der Fig. I gesehen.

Fig. 3 die räumliche Darstellung einer Vorrichtung nach der Erfindung an einem Rohrstutzen mit Explosions- und Implosionsklappe und in

Fig. 4 in perspektivischer Darstellung eine Einsicht von oben in den Rohrstutzen mit einer Mehrzahl von Implosionsklappen bei geöffneter Explosionsklappe.

An einem nicht dargestellten Behälter ist an geeigneter Stelle ein Auslaßstutzen I befestigt, der an seinem dem Behälter abgekehrten Ende einen Klappdeckel 2 aufweist, der mittels eines federbelasteten Verschlußelementes 3 in Normal- bzw. Bereitschaftsstellung in Schließstellung gehalten ist und im Explosionsfall um eine Schwenkachse 4 aufschwenken kann. Um die Schwenkachse 4 ist ferner ein Auffangteller 5 verschwenkbar, wobei die einander zugekehrten Flächen von Klappdeckel 2 und Auffangteller 5 eben ausge bildet sind. Dem Auffangteller 5 sind zwei jeweils beidseitig ebene Pufferplatten 6 ebenfalls verschwenkbar um die Schwenkachse 4 zugeordnet, die jeweils mit einem ein- oder zweiseitigen Randkragen 7 versehen sind, wie in abgebrochener Darstellung angedeutet ist.

An der Rückseite des Auffangtellers 5 sind zwei beidseitig U-förmige Gleitführungen 8 angeordnet, die gleichzeitig als Verstärkungsrippen für den Auffangteller dienen. In jeder Gleitführung ist eine Blattfeder 9 mit einem beidseitig in die beiden U-förmigen Gleitführungsprofile sich erstreckenden Gleitende I0 geführt, wobei das andere Ende jeder Blattfeder 9 an einer Wandung II des Auslaßstutzens I mittels Schrauben oder Nieten I2 starr eingespannt befestigt ist, wobei dieser Befestigungspunkt auf der der Schwenkachse 4 gegenüberliegenden Seite mit Abstand von der Schwenkachse sowohl in Richtung des Auslaßstutzens I als auch senkrecht dazu angeordnet ist. Zwischen den einzelnen Pufferplatten 6 und dem Auffangteller 5 können außerhalb der einander zugekehrten Flächen noch zusätzliche Gummi- oder Federpuffer angeordnet sein u. dgl.mehr.

Die Wirkungsweise der vorbeschriebenen Explosionsklappe ist wie folgt:
Im Explosionsfall wird der Klappdeckel 2 mit hoher Winkelgeschwindigkeit gegen die erste Pufferplatte 6 verschwenkt und vor seinem Auftreff=n durch das zwischen den beiden einander gegenüberliegenden ebenen Flächen sich befindende Luftpolster etwas gedämpft, welcher Vorgang bei der Annäherung der ersten Pufferplatte an die nächste Pufferplatte und dann an den Auffangteller 5 wiederholt wird, wobei die Dämpfungswirkung durch die Randkragen 7 an den Pufferplatten 6 noch verstärkt wird. Beim weiteren Aufschwenken des Auffangtellers 5 treten die Blattfedern 9 in Wirkung, und zwar schon progressiv aufgrund ihrer progressiven Kennlinie, wesentlich verstärkt aber noch durch die vorbeschriebene spezielle Anordnung bzw. Befestigung der Blattfedern. Wie sich aus Fig. I deutlich ergibt, entfernt sich nämlich der Abstützpunkt der Gleitenden I0 am Auffangteller 5 zunehmend von der Schwenkachse 4, wodurch die Abstützung des Auffangtellers 5 durch die Blattfedern 9 weiter verstärkt bzw. versteift wird, d.h. sich insgesamt eine weitere Progression der Wirkung der Blattfedern ergibt.

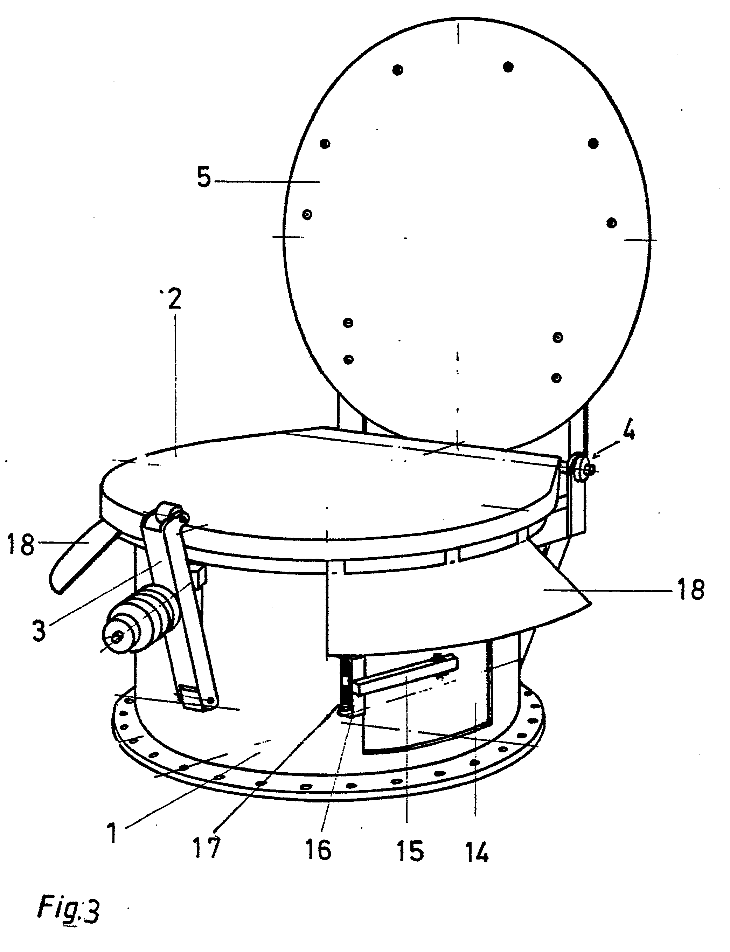

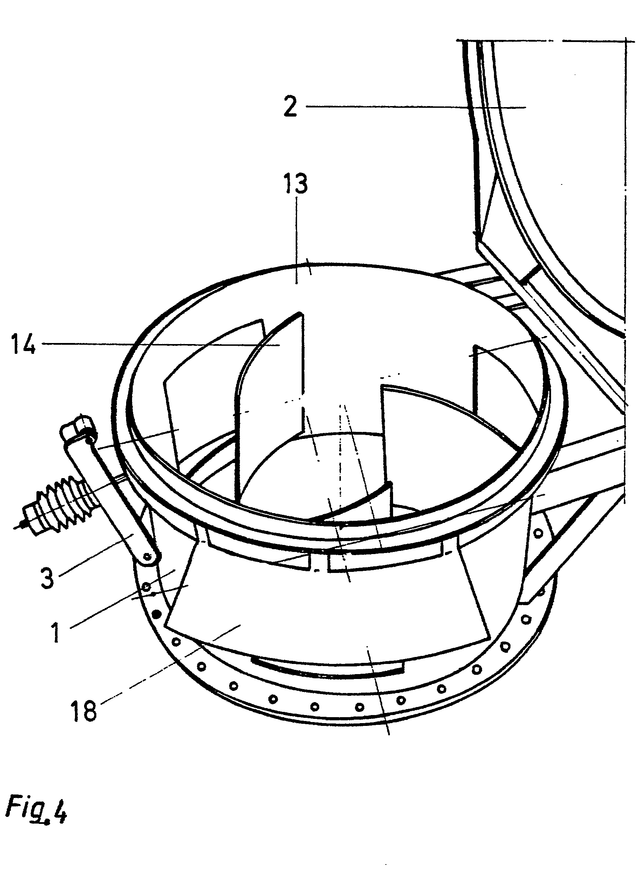

Bei dem in Fig. 3 u. 4 dargestellten Ausführungsbeispiel ist der Rohrstutzen I darüber hinaus noch mit wenigstens einer Unterdruckklappe I4 ausgerüstet, die sich an der Innenseite I3 (Fig. 4) mittels einer umlaufenden elastischen Dichtung am Rohrstutzen I anlegt. Im gemäß Fig. 4 dargestellten Beispiel sind drei Unterdruckklappen I4 am Umfang des Rohrstutzens I vorgesehen und in Fig. 4 in Öffnungs stellung wiedergegeben.

Jede Unterdruckklappe I4 ist über einen Scharnierhebel I5 mit dem Rohrstutzen 2 verbunden, wobei das Scharniergelenk I6 mit Federn I7 versehen ist, deren Schließkraft einstellbar ist, was nicht näher dargestellt wurde.

Der Scharnierhebel I5 am Scharniergelenk I6 ist bogenförmig bzw. winkelförmig gestaltet, um einen möglichst großen Öffnungsweg der Unterdruckklappe I4 zu ermöglichen, wie sich dies aus Fig. 3 in Verbindung mit Fig. 4 ergibt.

Um den Bereich des Rohrstutzens I, der mit den Unterdruckklappen I4 ausgerüstet ist, vor Witterungseinflüssen zu schützen, sind im dargestellten Beispiel Dächer I8 vorgesehen, die den Einfall von Regen, Schnee od. dgl. verhindern, um die Unterdruckklappen bei jeder Jahreszeit vollständig funktionsfähig zu halten.

Natürlich sind die beschriebenen Ausführungsbeispiele der Erfindung noch in vielfacher Hinsicht abzuändern, ohne den Grundgedanken zu verlassen. So können die Unterdruckklappen 8 auch statt in der dargestellten Weise an einem zentrischen, über federbeaufschlagte Öffnungsbolzen geführt sein, der an einem die Öffnung überbrückenden Bügel mittig angeordnet ist. Darüber hinaus können die Unterdruckklappen auch statt in der radialen Richtung auch in der zylindrischen Längsachsenrichtung zum Öffnen gestaltet sein, etwa in der Weise, daß der Scharnierhebel I5 mit dem Scharniergelenk I6 um 90° versetzt am Rohrstutzen I angeoronet ist u. dgl. mehr.

## Patentansprüche

I. Vorrichtung zum Ausgleich von Druckstößen bei möglichen Staub- oder Gasexplosionen in geschlossenen Systemen wie Silos, Rohrleitungen oder dgl. mit einem um eine Schwenkachse an einem Auslaßstutzen verschwenkbaren Klappdeckel (2) in Leichtbauweise und einem mittels elastischer Elemente mit dem Auslaßstutzen verbundenen Auffangteller (5), wobei die im Öffnungsfall aufeinanderzustrebenden Flächen des Klappdeckels (2) und des Auffangtellers (5) eben ausgebildet sind, dadurch gekennzeichnet, daß dem Auffangteller (5) in Richtung auf den Klappdeckel (2) mindestens eine beidseitig ebene Pufferplatte (6) mit geringem Winkelabstand derart zugeordnet ist, daß diese Pufferplatte (6) beim Auftreffen des Klappdeckels (2) gegen die ebene Fläche des Auffangtellers (5) verschwenkbar ist.

2. Vorrichtung nach Anspruch I, dadurch gekennzeichnet, daß der Winkelabstand in Bereitschaftsstellung zwischen dem Auffangteller (5) und der zugeordneten Pufferplatte (6) und zwischen evtl. weiteren Pufferplatten (6) jeweils ca. 5° beträgt.

3. Vorrichtung nach Anspruch I oder 2, dadurch gekennzeichnet, daß jede Pufferplatte (6) am Auffangteller (5) bzw. an der nächstbenachbarten Pufferplatte (6) mittels Kette od. dgl. gehalten ist.

4. Vorrichtung nach Anspruch I oder einem der folgenden, dadurch gekennzeichnet, daß jede Pufferplatte (6) mit einem ein- oder beidseitigen Randkragen (7) versehen ist.

5. Vorrichtung nach Anspruch I oder einem der folgenden, dadurch gekennzeichnet, daß der Auffangteller (5) in Bereitschaftsstellung in einem 90° geringfügig unterschreitenden Winkel zur Verschlußlage des Klappdeckels (2) angeordnet ist, insbesondere, daß der Winkel zwischen Auffangteller (5) und Klappdeckel (2) etwa 80° beträgt.

6. Vorrichtung nach Anspruch I oder einem der folgenden, dadurch gekennzeichnet, daß der Auffangteller (5) und die Pufferplatten (6) um die Schwenkachse (4) des Klappdeckels (2) schwenkbar angeordnet sind.

7. Vorrichtung nach Anspruch I oder einem der folgenden, dadurch gekennzeichnet, daß Blattfedern (9) mit progressiver Federkennlinie auf der der Schwenkachse (4) des Auffangtellers (5) gegenüber liegenden Seite an einem Ende mit Abstand von der Schwenkachse (4) sowohl in Richtung des Auslaßstutzens (I) als auch senkrecht dazu befestigt sind, während das andere Ende (I0) der Blattfedern (9) in an der Rückseite des Auffangtellers (5) angeordneten Gleitführungen (8) gleitbar beweglich ist.

8. Vorrichtung nach Anspruch 7, dadurch gekennzeichnet, daß die Gleitführungen (8) an der Rückseite des Auffangtellers (5) gleichzeitig als Verstärkungsrippen für diesen ausgebildet sind.

9. Vorrichtung nach Anspruch 8, dadurch gekennzeichnet, daß in Bereitschaftsstellung der Explosionsklappe das obere Gleitende (I0) der Blattfedern (9) einen Abstand von der Schwenkachse (4) des Auffangtellers (5) aufweist, der etwa einem Drittel der Erstreckung des Auffangtellers in Richtung der Gleitführungen (8) entspricht.

I0. Vorrichtung zum Ausgleich von Druckstößen bei möglichen Staub- oder Gasexplosionen in geschlossenen Systemen wie Silos, Rohrleitungen oder dgl. mit einem um eine Schwenkachse an einem Auslaßstutzen verschwenkbaren Klappdeckel in Leichtbauweise und einem mittels elastischer Elemente mit dem Auslaßstutzen verbundenen Auffangteller, wobei die im Öffnungsfall aufeinander zustrebenden Flächen des Klappdeckels und des Auffangtellers eben ausgebildet sind, insbesondere nach Anspruch I,
dadurch gekennzeichnet,
daß in einem Wandbereich (II) des Auslaßstutzen (I) eine sich an der Innenseite (I3) der Wand anlegende Unterdruckklappe (I4) vorgesehen ist, die über einen Scharnierhebel (I5) und mittels einer am Scharniergelenk (I6) angebrachten Feder (I7) in dichtender Stellung gehalten ist.

II. Vorrichtung nach Anspruch I0,
dadurch gekennzeichnet,
daß der Scharnierhebel (I5) winkel- oder bogenförmig zur Bereitstellung eines großen Öffnungsweges der Unterdruckklappe (I4) ausgebildet ist.

I2. Vorrichtung nach einem der vorangehenden Ansprüche,
dadurch gekennzeichnet,
daß die im Scharnier (I6) angeordnete Schließfeder (I3) in ihrer Federkraft einstellbar angeordnet ist.

I3. Vorrichtung nach einem der vorangehenden Ansprüche,
dadurch gekennzeichnet,
daß eine Mehrzahl von Unterdruckklappen (I4) am Umfang des Rohrstutzen (2) vorgesehen sind.

I4. Vorrichtung nach einem der vorangehenden Ansprüche,
dadurch gekennzeichnet,
daß die Bereiche des Rohrstutzen (2) mit den von den Unterdruckklappen (I4) verschlossenen Öffnungen außenseitig mit Witterungsschutzdächern (I8) ausgerüstet sind.

**Claims**

1. Apparatus for compensating for pressure surges in the event of possible dust or gas explosions in closed systems such as silos, pipelines or the like, comprising a flap cover (2) of lightweight construction, which is pivotable about a pivot axis on an outlet connection, and a catch plate (5) connected to the outlet connection by means of elastic elements, wherein the surfaces of the flap cover (2) and the catch plate (5) which move towards each other in an opening situation are of a flat configuration, characterised in that at least one buffer plate (6) which is flat on both sides is associated with the catch plate (5) in a direction towards the flap cover (2) at a small angular spacing in such a way that the buffer plate (6), upon impact of the flap cover (2), is pivotable towards the flat surface of the catch plate (5).

2. Apparatus according to claim 1 characterised in that the angular spacing in the position of readiness between the catch plate (5) and the associated buffer plate (6) and between further buffer plates (6) if provided is abort 5° in each case.

3. Apparatus according to claim 1 or claim 2 characterised in that each buffer plate (6) is held to the catch plate (5) or the next adjacent buffer plate (6) by means of a chain or the like.

4. Apparatus according to claim 1 or one of the following claims characterised in that each buffer plate (6) is provided with an edge collar (7) at one or both sides.

5. Apparatus according to claim 1 or one of the following claims characterised in that the catch plate (5) in the readiness position is arranged at an angle which is slightly less than 90° relative to the closure position of the flap cover (2) and in particular that the angle between the catch plate (5) and the flap cover (2) is about 80°.

6. Apparatus according to claim 1 or one of the following claims characterised in that the catch plate (5) and the buffer plates (6) are arranged pivotably about the pivot axis (4) of the flap cover (2).

7. Apparatus according to claim 1 or one of the following claims characterised in that leaf springs (9) with a progressive spring characteristic are secured on the side in opposite relationship to the pivot axis (4) of the catch plate (5) at one end at a spacing from the pivot axis (4) both in the direction of the outlet connection (1) and also perpendicularly thereto while the other end (10) of the leaf springs (9) is slidably movable in sliding guides (8) arranged at the rear side of the catch plate (5).

8. Apparatus according to claim 7 characterised in that the sliding guides (8) at the rear side of the catch plate (5) are at the same time in the form of reinforcing ribs for the catch plate.

9. Apparatus according to claim 8 characterised in that in the position of readiness of the explosion flap the upper sliding end (10) of the leaf springs (9) is at a spacing from the pivot axis (4) of the catch plate (5) which corresponds to approximately a third of the extent of the catch plate in the direction of the sliding guides (8).

10. Apparatus for compensating for pressure surges in the event of possible dust or gas explosions in closed systems such as silos, pipelines or the like, comprising a flap cover of lightweight construction, which is pivotable about a pivot axis on an outlet connection, and a catch plate connected to the outlet connection by means of elastic elements, wherein the surfaces of the flap cover and the catch plate which move towards each other in an opening situation are of a flat configuration, in particular according to claim 1, characterised in that provided in a wall region (11) of the outlet connection (1) is a reduced-pressure flap (14) which bears against the inward side (13) of the wall and which is held in a sealing position by way of a hinge lever (15) and by means of a spring (17) mounted on the hinge joint (16).

11. Apparatus according to claim 10 characterised in that the hinge lever (15) is of an angular or arcuate configuration to provide a large opening travel for the reduced-pressure flap (14).

12. Apparatus according to one of the preceding claims characterised in that the closing spring (13) which is arranged in the hinge (16) is arranged to be adjustable in respect of its spring force.

13. Apparatus according to one of the preceding claims characterised in that a plurality of reduced-pressure flaps (14) are provided at the periphery of the tubular connection (2).

14. Apparatus according to one of the preceding claims characterised in that the regions of the tubular connection (2) with the openings which are closed by the reduced-pressure flaps (14) are provided on their outward side with weather-proofing roofs (18).

**Revendications**

1. Dispositif pour compenser des ondes de pression lors d'éventuelles explosions de poussière ou de gaz, dans des systèmes fermés tels que des silos, des conduites tubulaires ou analogues, comprenant un couvercle rabattable (2) d'un type de réalisation léger, pouvant pivoter autour d'un axe de pivotement sur un raccord de sortie, ainsi qu'un plateau récepteur (5) relié au racord de sortie au moyen d'éléments élastiques, les surfaces du couvercle rabattable (2) et du plateau récepteur (5), ayant tendance à s'appliquer l'une sur l'autre en cas d'ouverture, étant de réalisation plane, caractérisé par le fait qu'au moins une plaque-tampon (6) plane de part et d'autre est associée au plateau récepteur (5) en direction du couvercle rabattable (2), avec une faible distance angulaire, de telle sorte que cette plaque-tampon (6) puisse être animée d'un pivotement contre la surface plane du plateau récepteur (5) lors de l'impact du couvercle rabattable (2).

2. Dispositif selon la revendication 1, caractérisé par le fait que la distance angulaire mesure environ 5°, en position d'attente, respectivement entre le plateau récepteur (5) et la plaque-tampon associée (6), et entre d'éventuelles autres plaques-tampons (6).

3. Dispositif selon la revendication 1 ou 2, caractérisé par le fait que chaque plaque-tampon (6) est respectivement retenue, sur le plateau récepteur (5) ou sur la plaque-tampon (6) immédiatement voisine, au moyen d'une chaîne ou élément similaire.

4. Dispositif selon la revendication 1 ou l'une des suivantes, caractérisé par le fait que chaque plaque-tampon (6) est pourvue d'une collerette marginale (7) située sur un ou sur deux côtés.

5. Dispositif selon la revendication 1 ou l'une des suivantes, caractérisé par le fait que le plateau récepteur (5) est disposé, en position d'attente, selon un angle légèrement inférieur à 90° par rapport à la position d'obturation du couvercle rabattable (2); notamment par le fait que l'angle entre le plateau récepteur (5) et le couvercle rabattable (2) mesure environ 80°.

6. Dispositif selon la revendication 1 ou l'une des suivantes, caractérisé par le fait que le plateau récepteur (5) et les plaques-tampons (6) sont agencés avec faculté de pivotement autour de l'axe de pivotement (4) du couvercle rabattable (2).

7. Dispositif selon la revendication 1 ou l'une des suivantes, caractérisé par le fait que des lames de ressort (9) à courbe caractéristique progressive sont fixées, par une extrémité, du côté opposé à l'axe de pivotement (4) du plateau récepteur (5), à distance de l'axe de pivotement (4), tant en direction du raccord de sortie (1) que perpendiculairement à ce dernier, cependant que l'autre extrémité (10) des lames de ressort (9) sont mobiles à coulissement dans des glissières de guidage (8) disposées à la face postérieure du plateau récepteur (5).

8. Dispositif selon la revendication 7, caractérisé par le fait que les glissières de guidage (8), situées à la face postérieure du plateau récepteur (5), sont simultanément réalisées sous la forme de nervures de renforcement dudit plateau.

9. Dispositif selon la revendication 8, caractérisé par le fait que, dans la position d'attente du couvercle rabattable anti-explosion, l'extrémité supérieure coulissante (10) des lames de ressort (9) présente, par rapport à l'axe de pivotement (4) du plateau récepteur (5), une distance correspondant sensiblement à un tiers de l'étendue dudit plateau récepteur en direction des glissières de guidage (8).

10. Dispositif pour compenser des ondes de pression lors d'éventuelles explosions de poussière ou de gaz, dans des systèmes fermés tels que des silos, des conduites tubulaires ou analogues, comprenant un couverce rabattable d'un type de réalisation léger, pouvant pivoter autour d'un axe de pivotement sur un raccord de sortie au moyen d'éléments élastiques, les surfaces du couvercle rabattable et du plateau récepteur, ayant tendance à s'appliquer l'une sur l'autre en cas d'ouverture, étant de réalisation plane, en particulier selon la revendication 1, caractérisé par le fait qu'il est prévu, dans une zone de paroi (11) du raccord de sortie (1), un volet de dépression (14) qui s'applique contre la face interne (13) de la paroi et est maintenu, dans une position étanche, par l'intermédiaire d'un levier articulé (15) et au moyen d'un ressort (17) installé sur l'articulation (16) de la charnière.

11. Dispositif selon la revendication 10, caractérisé par le fait que le levier articulé (15) est réalisé en forme de cornière ou d'arc de cercle, en vue de conférer une grande course d'ouverture au volet de dépression (14).

12. Dispositif selon l'une des revendications précédentes, caractérisé par le fait que le ressort de fermeture (13) intégré dans la charnière (16) présente une force élastique réglable.

13. Dispositif selon l'une des revendications précédentes, caractérisé par le fait que de multiples volets de dépression (14) sont prévus sur le pourtour du manchon tubulaire (2).

14. Dispositif selon l'une des revendications précédentes, caractérisé par le fait que les régions du manchon tubulaire (2) qui présentent les ouvertures obturées par les volets de dépression (14) sont épuipées, extérieurement, d'auvents (18) de protection contre les intempéries.

Fig.1

A →

EP 0 232 478 B1

Fig. 2

Fig:3

Fig. 4